Europäisches Patentamt

European Patent Office

Office européen des brevets

(11) Veröffentlichungsnummer: **0 575 953 A1**

# (12) EUROPÄISCHE PATENTANMELDUNG

(21) Anmeldenummer: **93109926.1**

(22) Anmeldetag: **22.06.93**

(51) Int. Cl.⁵: **G11B 5/72**

(30) Priorität: **25.06.92 DE 4220806**

(43) Veröffentlichungstag der Anmeldung:
**29.12.93 Patentblatt 93/52**

(84) Benannte Vertragsstaaten:
**DE FR GB**

(71) Anmelder: **BASF Magnetics GmbH**
**Dynamostrasse 3**
**D-68165 Mannheim(DE)**

(72) Erfinder: **Jaeger, Ulrich, Dr.**
**Ludwigstrasse 8a**
**D-6721 Harthausen(DE)**
Erfinder: **Bobrich, Michael, Dr.**
**In den Muehlgaerten 3**
**D-6737 Boehl-Iggelheim(DE)**
Erfinder: **Kopke, Helmut**
**Goethestrasse 11**
**D-6714 Weisenheim(DE)**
Erfinder: **Eder, Rainer**
**Auf der Schwann 39**
**D-6780 Pirmasens(DE)**
Erfinder: **Schildberg, Hans-Peter, Dr.**
**Collinistrasse 5**
**D-6800 Mannheim 1(DE)**
Erfinder: **Schomann, Klaus Dieter, Dr.**
**Kopernikusstrasse 47**
**D-6700 Ludwigshafen(DE)**
Erfinder: **Keller, Harald, Dr.**
**Oggersheimer Strasse 118**
**D-6700 Ludwigshafen(DE)**

(74) Vertreter: **Langfinger, Klaus-Dieter, Dr. et al**
**BASF Aktiengesellschaft,**
**Patentabteilung ZDX - C 6**
**D-67056 Ludwigshafen (DE)**

(54) **Magnetisches Aufzeichnungsmedium.**

㉗ Die Erfindung betrifft ein magnetisches Aufzeichnungsmedium, umfassend ein unmagnetisches Trägermaterial und mindestens eine darauf aufgebrachte ferromagnetische Metallschicht sowie einer auf dieser Metallschicht ausgebildeten Schutzschicht aus einem Urethan.

EP 0 575 953 A1

Die Erfindung betrifft ein magnetisches Aufzeichnungsmedium, umfassend ein unmagnetisches Trägermaterial und mindestens eine darauf aufgebrachte ferromagnetische Metallschicht sowie eine auf dieser Metallschicht ausgebildete Schutzschicht aus einem organischen Material.

Die magnetischen Schichten der üblichen Aufzeichnungsträger bestehen aus polymeren organischen Bindemitteln mit darin fein verteilten magnetischen Oxid- oder Metallteilchen. In dem Bestreben, die Aufzeichnungsdichte der magnetischen Aufzeichnungsträger insbesondere auf dem Gebiet der Video- und Datenaufzeichnung zu erhöhen, war es erforderlich, die Schichtdicken der Aufzeichnungsschicht stetig weiter zu verringern. Derartige dünne Schichten lassen sich jedoch nicht mehr mit den Oxid- oder Metallteilchen/Bindemittelschichten erreichen. Es wurde daher schon vorgeschlagen, dünne ferromagnetische Metallschichten als Aufzeichnungsschichten einzusetzen. Bekannt sind chemisch oder elektrolytisch abgeschiedene ferromagnetische Metall- bzw. Legierungsschichten, insbesondere aus Kobalt und/oder Nickel, sowie vor allem aber auf das Trägermaterial aufgedampfte oder aufgesputterte ferromagnetische Schichten der Metalle oder Legierungen von z.B. Eisen, Kobalt, Nickel, Chrom und Seltene Erden.

Derartige ausgebildete Aufzeichnungsträger werden jedoch meist im ständigen mechanischen Kontakt mit dem Magnetkopf verwendet. Dies bedeutet, daß die Oberfläche der Magnetschicht hervorragende Korrosions- und Abriebfestigkeit aufweisen muß. Da jedoch die für die Aufzeichnungsschichten geeigneten ferromagnetischen Metallschichten meist keine entsprechenden Eigenschaften aufweisen, ist die Ausbildung von Schutzschichten erforderlich. Bei der Auswahl solcher Schutz schichten ist darauf zu achten, daß weder das Aufbringen der Schutzschicht noch die Schutzschicht selbst in irgendeiner Weise die Magnetschicht nachteilig beeinflussen.

Zur Lösung dieser Probleme wurde bereits eine Vielzahl von Vorschlägen gemacht. So beschreibt die US-A 3 767 369 das Aufbringen einer Rhodiumschutzschicht zur Verbesserung der Härte und der Gleiteigenschaft, wobei zur Verbesserung der zu geringen Haftung des Rhodiums auf der Magnetschicht eine Zinn-Nickel-Zwischenschicht aufgebracht werden muß. Dieses Verfahren erbringt weder die inzwischen geforderten Schutzschichteigenschaften, noch ist deren Aufbringen einfach und problemlos zu bewerkstelligen. Für alle jenen Fälle, bei denen die metallische Magnetschicht kobalthaltig ist, wurde vorgeschlagen, diese Magnetschicht bei vorgegebener Feuchtigkeit an Luft zu tempern und damit oberflächlich zu oxidieren (USA 3 353 166, USA 4 029 541). Ein solches Verfahren weist jedoch besondere Nachteile auf. So kann ein Temperprozeß, der zur Fertigung der genannten Schutzschichten nötig ist, sowohl die magnetischen Eigenschaften der Aufzeichnungsschicht selbst als auch an sich übliche Unter- oder Zwischenschichten derart beeinflussen, daß sie ihrerseits wieder die Eigenschaften der Magnetschichten beeinträchtigen.

Nach anderen Verfahren werden unterschiedliche Schutzschichten im Vakuum, meist durch Sputtern, aufgebracht, so gemäß der US-A 4 277 540 Schichten aus Gold, Tantal, Niob, Platin, Chrom, Wolfram und Rhodium sowie den Nitriden oder Carbiden des Siliciums, Zirkons, Hafniums und Titans und gemäß der US-A 4 268 369 Schichten aus Siliciumdioxid. Des weiteren werden in der DD-A 109 101 für Magnetspeicher mit metallischer Dünnschicht Schutzschichten aus im Vakuum aufgewachsenen Kohlenstoffschichten beschrieben. Solche Kohlenstoffschutzschichten sind allerdings wegen eines ungenügenden Korrosionsschutzes wenig für die rein metallischen Magnetschichten geeignet. Auch die Herstellung einer Deckschicht aus einem Kohlenstoff und Wasserstoff enthaltenden plasmapolymerisierten Film ist bekannt (DE-A 35 45 794).

Auch das Aufbringen flüssiger Oligomeren, z.B. von Perfluorpolyethern, auf die zu schützende Magnetschicht ist beispielsweise aus der US-PS 3 778 308 bekannt, neben der Verwendung unterschiedlichster, meist Fluorgruppen tragender Substanzen, wie z.B. in EP-A 282 188 oder EP-A 320 241 beschrieben. Zur Ausbildung von Schutzschichten wurde auch schon vorgeschlagen, hierfür Kombinationen aus festen und flüssigen Gleitmitteln, wie z.B. Semifluorverbindungen und Perfluorpolyethern (DE-A 38 16 467), oder Kohlenstoffschichten in Verbindung mit fluorierten Produkten (JP-A 79 916/1989) sowie von durch Plasmazersetzung entstandenen Kohlenstoffschichten zusammen mit Organofluorverbindungen (US-A 4 816 334) heranzuziehen.

Alle diese Schutz schichten bringen zwar für die jeweils vorgesehene Problemstellung eine Verbesserung, sie können jedoch nicht in allen Eigenschaften, wie vor allem in Abrieb-, Gleit- und Dauerstandsfestigkeit sowie hinsichtlich Korrosion befriedigen und dabei gleichzeitig die Aufzeichnungseigenschaften der Magnetschicht nicht nachteilig beeinflussen. Ein Nachteil der perfluorierten Substanzen, besonders der perfluorierten Polyether, ist deren schlechte Löslichkeit in organischen Lösungsmitteln, wie z.B. THF. Bei ihrer Anwendung muß durchweg auf Freone zurückgegriffen werden.

Aufgabe der Erfindung war es daher, ein magnetisches Aufzeichnungsmedium bereitzustellen, bei dem die auf der ferromagnetischen Metalldünnschicht erzeugte Schutzschicht die vorgenannten Nachteile nicht aufweist und sich insbesondere durch gute Verschleiß- und Korrosionsfestigkeit auszeichnet.

Es wurde nun gefunden, daß sich bei einem magnetischen Aufzeichnungsmedium, umfassend ein unmagnetisches Trägermaterial und mindestens eine darauf aufgebrachte ferromagnetische Metallschicht sowie einer auf der Metallschicht ausgebildeten Schutzschicht, die Aufgabe lösen läßt, wenn die Schutzschicht aus einem Polyurethan mit einem mittleren Molekulargewicht (Gewichtsmittel) von 500 bis 10 000 besteht, das durch Umsetzung

(A) eines Isocyanats der allgemeinen Formel I

$$Q\text{-}(NCO)_2 \quad (I)$$

mit

(B) einer Verbindung der allgemeinen Formel II
   (B1)

$$R_f\text{-}A\text{-}B \quad (II)$$

und/oder der allgemeinen Formel III
   (B2)

$$X\text{-}R_H\text{-}B \quad (III)$$

erhalten wird und worin

Q     einen Alkyl-, Cycloalkyl- oder Heterocycloalkylrest,

z     eine ganze Zahl von 1 bis 5,

Rf    einen Perfluor(cyclo)alkyl- oder Perfluoralkylarylrest mit 3 bis 30 C-Atomen,

A     einen $-(CH_2)_n$-Rest mit n = 1 bis 10,

B     eine -OH, $=NH$, $-NH_2$ oder -COOH Gruppe,

$R_H$    einen Alkyl- oder Cycloalkylrest mit 1 bis 30 C-Atomen und

X     -H, -OH, $=NH$, $-NH_2$, $-SO_3H$ oder $-SO_3Na$

bedeuten.

Die für die Ausbildung der auf den erfindungsgemäßen Aufzeichnungsmedien aufgebrachten Schutzschicht geeigneten Komponenten sind bezüglich der

Komponente (A) : Octadecylisocyanat, Isophorondiisocyanat, das Trimerisierungsprodukt von Hexamethylendiisocyanat, Trimethylhexamethylendiisocyanat, Toluylendiisocyanat, wobei das Trimerisierungsprodukt von Hexamethylendiisocyanat, Octadecylisocyanat oder Isophorondiisocyanat besonders geeignet ist.

Komponente (B 1): 1.1.1-Trifluorethanol, Hexafluorisopropanol, Tridecafluorooctanol, Pentadecafluorooctanol und höhere Homologe, die sich um eine $CF_2$-Gruppe unterscheiden; Perfluorbutancarbonsäure, Perfluoroctancarbonsäure;

Komponente (B 2): Undecanol, Octadecanol und weitere Fettalkohole; Polyethylenglykolmonoalkylether; Hydroxyalkylsulfonsäuren z.B. Hydroxyethylsulfonsäure.

Bei der Umsetzung der Komponenten (A) und (B) sind sowohl die Varianten (A) mit (B1) sowie (A) mit (B2) geeignet, wobei die Verbindungen aus (A) mit (B1) und (B2) bevorzugt sind. Die Verfahren zur Umsetzung der (B)-Komponenten mit den Isocyanatkomponenten sind bekannt. Gegebenenfalls werden Katalysatoren, wie z.B. Dibutylzinndilaurat, zur Beschleunigung der Reaktion in Mengen zwischen 0,01 und 2 Gew.-% zugegeben. Die Urethanreaktion wird zwischen 30 und 150°C, bevorzugt zwischen 60 und 110°C, durchgeführt. Die Reaktion kann in der Schmelze oder in einem gegen Isocyanat inerten Lösungsmittel durchgeführt werden. Das bei dieser Reaktion entstandene Material wird anschließend in Lösung nach üblichen Methoden auf die Metallschicht aufgebracht. Als Lösungsmittel kommen z.B. chlorierte Kohlenwasserstoffe, Ketone, Dioxane, Tetrahydrofuran in Frage, wobei bevorzugt Tetrahydrofuran eingesetzt wird und die Konzentration 0,01 bis 2 Gew.%, vorzugsweise 0,02 bis 0,05 Gew.% beträgt.

Die magnetischen Aufzeichnungsträger mit ferromagnetischer Metalldünnschicht und ihr Aufbau aus unmagnetischem Trägermaterial, gegebenenfalls unmagnetischer Zwischenschicht und ferromagnetischer Metalldünnschicht sind bekannt. Als Trägermaterial sind sowohl starre als auch flexible Materialien üblich. Vorwiegend werden Scheiben aus Aluminium oder deren Legierungen sowie Scheiben oder Folienbahnen aus Polyethylenterephthalat oder Polyimid eingesetzt.

Zur Ausbildung geeigneter Magnetschichten werden die Trägermaterialien mit einer unmagnetischen Unterschicht versehen. Bekannt sind bei plattenförmigen Aluminium-Trägermaterialien chemisch bzw. autokatalytisch abgeschiedene amorphe NickelPhosphor-Legierungsschichten mit einem Phosphoranteil von 7 bis 11 Gew.%. Die Schichtstärken betragen üblicherweise 5 bis 50, insbesondere 10 bis 30 $\mu$m. Die so aufgebrachten unmagnetischen Unterschichten bewirken im Falle der Aluminiumträgermaterialien eine Verbesserung in der Bearbeitbarkeit der Oberfläche verglichen mit dem unbeschichteten Aluminiumträger.

Als ferromagnetische Metalldünnschichten kommen die üblichen mit Schichtstärken von etwa 300 bis 1500 Å in Frage, die in an sich bekannter Weise durch chemische Abscheidung, galvanische Abscheidung oder durch Aufdampfen bzw. Aufsputtern, d.h. Abscheidung der Metalle oder Metallegierungen im Hochvakuum auf die Träger, abgeschieden werden. Als geeignete magnetische Materialien sind Eisen, Nickel, Kobalt oder deren Legierungen untereinander oder mit geringen Anteilen anderer Elemente zu nennen. Geeignete kobalthaltige ferromagnetische Metalldünnschichten sind u.a. Kobalt-Phosphor-, Kobalt-Bor- sowie Kobalt-Nickel-, Kobalt-Nickel-Eisen-, Kobalt-Eisen- sowie Phosphor-, Bor- und/oder Stickstoff-enthaltende Legierungen der genannten Art, z.B. Legierungen aus 95 bis 98 % Kobalt und 2 bis 10 % Phosphor, 30 bis 20 % Nickel und 70 bis 80 % Kobalt, 90 % Kobalt, 9 % Nickel und 1 % Phosphor, 88 % Kobalt, 9 % Nickel und 3 % Bor oder 40 bis 50 % Kobalt, 40 bis 50 % Nickel und 1 bis 5 % Bor. Mit diesen Legierungen lassen sich durch chemische Abscheidung auf polierten Substraten Filme von unter 60 nm Dicke herstellen mit z.B. einer Koerzitivfeldstärke von 20 bis 75 kA/m und einer Sättigungsmagnetisierung von 1 bis 1,5 Tesla. Ebenfalls geeignet sind durch einen Sputterprozeß erzeugte ferromagnetische Schichten, welche gegebenenfalls auf eine aufgesputterte Chromzwischenschicht niedergeschlagen werden. Gleichfalls bekannt ist eine Zulegierung von Chrom zur Magnetschicht.

Die erfindungsgemäßen magnetischen Aufzeichnungsträger zeigen eine hervorragende mechanische Festigkeit der Oberfläche die sich durch eine besondere Widerstandsfestigkeit bei der vielfachen Benutzung des Aufzeichnungstragers bewährt. Ebenfalls sind die erfindungsgemäßen magnetischen Aufzeichnungsträger durch die Schutzschicht sehr stabil gegen die durch Luft bzw. Luftfeuchtigkeit verursachte Korrosion der dünnen magnetischen Metallschichten.

Die Erfindung sei anhand der folgenden Beispiele näher erläutert.

Beispiel 1

13,3 Teile (33,25 mmol) Pentadecafluorooctanol werden in 13,3 Teilen Toluol gelöst und auf 60 °C erwärmt. Zu diesen werden 9,8 Teile Octadecylisocyanat (33,25 mmol) gelöst in 9,8 Teilen Toluol zugegeben. Die Mischung wird bei dieser Temperatur gehalten, bis kein Isocyanat mehr nachweisbar ist. Anschließend wird das Lösungsmittel abgedampft.

Beispiel 2

10,23 Teile trimerisiertes Hexamethylendiisocyanat (50 mmol) werden in der gleichen Menge Tetrahydrofuran vorgelegt und auf Rückflußtemperatur erhitzt. Hierzu werden bei dieser Temperatur 9,4 Teile Perfluordodecanol $[C_{12}H_4F_{21}OH]$ (17 mmol) und 9 Teile Octadecanol (33 mmol) zugegeben. Nachdem kein Isocyanat mehr nachweisbar war, wurde das Lösungsmittel abgedampft.

Beispiel 3

Durch eine 0,01 %ige Lösung der gemäß Beispiel 1 erhaltenen Verbindung in THF wird ein Magnetband, bestehend aus einem PET-Trägermaterial und einer durch Aufdampfen erzeugten 200 $\mu$m dicken $(Co_{80}Ni_{20})$ Schicht, mit einer Geschwindigkeit von etwa 2 mm/s gezogen. Die Trocknung erfolgt durch Verdunsten des THF an Luft.

An einem derart lubrizierten Magnetband wurde nun der SQR-Koeffizient (superquasistatische Reibung) bestimmt. Dies geschieht durch Messen einer Zugkraft, die ein über eine feststehende Glashülse geführtes Magnetband durch Reibung erzeugt.

Meßbedingungen

Bandgeschwindigkeit (Spindelvorschub) :
$V_1$ = 550 $\mu$m/s
$V_2$ = 13 $\mu$m/s
Bandzug vor der Glashülse:
$F_1$ = 30 cN
Umschlingungswinkel:
$\alpha$ = 90 °
Prüfklima:
23 °C, 50 % rel.Feuchte
Vor der Messung wird die Glashülse mit Alkohol gereinigt, mit einem weichen Lappen trocken gerieben und mit einem Perlontuch nachpoliert.

Messung: Das eine Ende eines 0,5 m langen Bandstücks wird an einer Kaftmeßdose befestigt. Das andere Ende wird mit der Schichtseite über die horizontal gelagerte Glashülse geführt und durch Anhängen eines Gewichts von 30 g der Bandzug $F_1$ von 30 cN erzeugt. Mit 5 Präparierzyklen (Bewegung mit $V_1$ um 50 mm vorwärts/rückwärts) wird die Glashülse für das betreffende Band vorbereitet. Anschließend wird das Band durch Vertauschen des Anfangs mit dem Ende umgedreht und 5 Meßzyklen (Bewegung $V_2$ mit 5 mm vorwärts/rückwärts) durchgeführt. Dabei stellt der Zug an der Meßdose im 5. Zyklus bei der Vorwärtsbewegung $F_2$ ein Maß für den Reibungskoeffizienten dar, dessen Wert sich aus der Formel

$$\mu_{SQR} = \frac{1}{\alpha} \cdot \ln \frac{F_2}{F_1}$$

ergibt.

Die Messung ergab einen SQR-Wert von 0,22.

Beispiel 4

Es wird wie in Beispiel 3 beschrieben verfahren, jedoch wird als Lubrikant die Verbindung gemäß Beispiel 2 eingesetzt.

Die Messung ergab einen SQR-Wert von 0,22.

Vergleichsversuch

Es wird wie in Beispiel 3 beschrieben verfahren, jedoch wird als Lubrikant ein als solches handelsübliches Perfluorpolyetherol (Fombline-Z-Dol der Fa. Montefluos) eingesetzt.
Die Messung ergab einen SQR-Wert von 0,36.

**Patentansprüche**

1. Magnetisches Aufzeichnungsmedium, umfassend ein unmagnetisches Trägermaterial und mindestens eine darauf aufgebrachte ferromagnetische Metallschicht sowie eine auf der Metallschicht ausgebildete Schutzschicht, dadurch gekennzeichnet, daß die Schutzschicht aus einem Polyurethan mit einem mittleren Molekulargewicht von 500 bis 10 000 besteht, das durch Umsetzung

   (A) eines Isocyanats der allgemeinen Formel I

   Q-(NCO)₂    (I)

   mit
   (B) einer Verbindung der allgemeinen Formel II
      (B1)

      $R_f$-A-B    (II)

      und/oder der allgemeinen Formel III
      (B2)

      X-$R_H$-B    (III)

      erhalten wird und worin

   | | |
   |---|---|
   | Q | einen Alkyl-, Cycloalkyl- oder Heterocycloalkylrest, |
   | z | eine ganze Zahl von 1 bis 5, |
   | $R_f$ | einen Perfluor(cyclo)alkyl- oder Perfluoralkylarylrest mit 3 bis 30 C-Atomen, |
   | A | einen -(CH₂)n-Rest mit n = 1 bis 10, |
   | B | eine -OH, =NH, -NH₂ oder -COOH Gruppe, |
   | $R_H$ | einen Alkyl- oder Cycloalkylrest mit 1 bis 30 C-Atomen und |
   | X | -H, -OH, =NH, -NH₂, -SO₃H oder -SO₃Na |

   bedeuten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 114 248 (FUJI PHOTO FILM CO., LTD.) 22. April 1982 * Seite 4, Absatz 1 * * Seite 6, Absatz 3 - Seite 7, Absatz 1 * --- | 1 | G11B5/72 |
| A | DATABASE WPI Week 8601, Derwent Publications Ltd., London, GB; AN 86-002379 & JP-A-60 140 535 (KONISHIROKU PHOTO KK) 25. Juli 1985 * Zusammenfassung * ----- | 1 | |

RECHERCHIERTE SACHGEBIETE (Int. Cl.5)

G11B

Der vorliegende Recherchenbericht wurde für alle Patentansprüche erstellt

| Recherchenort | Abschlußdatum der Recherche | Prüfer |
|---|---|---|
| DEN HAAG | 27 SEPTEMBER 1993 | KLOCKE S. |